# EUROPEAN PATENT APPLICATION

(11) **EP 1 631 036 A2**
(43) Date of publication of application: **01.03.2006**
(21) Application number: 05018581.8
(22) Date of filing: 26.08.2005
(51) Int. Cl.: H04L 29/06, H04Q 7/38

(54) **Device authentication in a service control system**

(30) Priority: 27.08.2004 JP 2004249165
(71) Applicant: NTT DoCoMo, Inc., Tokyo (JP)
(72) Inventor: Suzuki, Takashi I.P. Department, 2-11-1, Nagatacho Chiyoda-ku Tokyo (JP); Inamura, Hiroshi I.P. Department, 2-11-1, Nagatacho Chiyoda-ku Tokyo (JP); Miyake, Motoharu I.P. Department, 2-11-1, Nagatacho Chiyoda-ku Tokyo (JP)
(74) Representative: HOFFMANN EITLE

(57) **Abstract**

A device authentication apparatus (30), including: a device identification information acquisition unit (31) configured to acquire identification information specific to a device; a connection protection unit (34) configured to protect a connection with the device; and an identifier generation unit (33) configured to combine all or some of the device-specific identification information, a device identification information type representing a type of the device-specific identification information, and a protection method type representing a type of a protection method used by the connection protection unit (34) to generate an identifier for a pair of the connected device and a connection environment.

## Description

### CROSS REFERENCE TO RELATED APPLICATIONS

This application is based upon and claims the benefit of priority from prior Japanese Patent Application P2004-249165 filed on August 27, 2004; the entire contents of which are incorporated by reference herein.

### BACKGROUND OF THE INVENTION

### 1. Field of the Invention

The present invention relates to a device authentication apparatus, a service control apparatus, a service request apparatus, a device authentication method, a service control method, and a service request method.

### 2. Description of the Related Art

In an environment where an external device is connected to a gateway apparatus, when delivering a service to the external device, a service provider apparatus requires access control according to end-to-end security taking an account of a type of the device and a connection environment.

For example, a content delivery system is disclosed, in which a terminal device is provided with a tamper resistant apparatus whose content cannot be externally known and a decryption key for encrypted content can be obtained only inside the tamper resistant apparatus (for example, see Japanese Patent Laid-open Publication No. 2003-32239). A content delivery server can establish a secure end-to-end connection using a key shared with the tamper resistant apparatus and deliver content valuable on the connection.

On the other hand, when the external device does not include functions of authentication and key exchange between the service provider server and the device, security between the external device and the service provider apparatus can be established using a hop-by-hop security function. For example, a tamper resistant apparatus which a service provider can trust is incorporated in the gateway apparatus, and the service provider apparatus provides services based on a trust relationship with the gateway apparatus and security of a mechanism of connection protection. A technology is disclosed, which provides a security function for the gateway apparatus to protect content by the security function (for example, see Japanese Patent Laid-open No. 2002-132595).

However, the service provider apparatus has no way to know security levels of the external device and the connection environment behind the gateway and must completely entrust the access control to the gateway apparatus or uniformly perform the access control based on the trust relationship with the gateway apparatus and the security of the connection protection mechanism.

The external device is of various types, and the connection environment including the connection method and the connection protection method is also varied. The service provider has a desire to determine availability of service provision based on the end-to-end security level taking an account of the type of the device, the connection environment, and the like. For example, a service provider who provides content for mobile phones will desire to provide the content for only devices having a security mechanism equivalent to that of mobile phones. On the other hand, the service provider will not desire to deliver content to which strict protection is desired to be applied to a device including a protection function with a comparatively low security level such as the WEP, which is a link protection mechanism of wireless LAN.

In the light of the above problem, the present invention has an object to provide a device authentication apparatus, a service control apparatus, a service request apparatus, a device authentication method, a service control method, and a service request method which implements control of access to a service based on device identification information and the end-to-end security level reflecting the device connection environment.

### SUMMARY OF THE INVENTION

A first aspect of the present invention is to provide a device authentication apparatus, including: (A) a device identification information acquisition unit configured to acquire identification information specific to a device; (B) a connection protection unit configured to protect a connection with the device; and (C) an identifier generation unit configured to combine all or some of the device-specific identification information, a device identification information type representing a type of the device-specific identification information, and a protection method type representing a type of a protection method used by the connection protection unit to generate an identifier for a pair of the connected device and a connection environment.

A second aspect of the present invention is to provide a service control apparatus disposed between a device and a service provision apparatus providing a service for the device, including: (A) a service request receiving unit configured to receive a service request; (B) a compliance verification unit configured to verify compliance with an access control rule based on an identifier for a pair of the connected device and a connection environment, the identifier being generated by combining all or some of identification information specific to the device, a device identification information type representing a type of identification information specific to the device, and a protection method type representing a type of a protection method used in protecting a connection with the device; (C) a service request processing unit configured to process the service request received by the service request receiving unit based on a result of the verification by the compliance verification unit; and (D) a service request transfer unit configured to transfer the service request processed by the service request processing unit to the service provider apparatus.

A third aspect of the present invention is to provide a service request apparatus requesting a service for a device, including: (A) a service request creation unit configured to create a service request including an identifier for a pair of the connected device and a connection environment, the identifier being generated by combining all or some of identification information specific to the device, a device identification information type representing a type of the identification information specific to the device, a protection method type representing a type of a protection method used in protecting a connection with the device; and (B) a service response receiving unit configured to receive a service response for the service request, the service response including metadata describing information to acquire service to be transferred to the device, (C) wherein the service request creation unit further creates a service transfer request according to the metadata.

A forth aspect of the present invention is to provide a device authentication method, including: (A) acquiring identification information specific to a device; (B) protecting a connection with the device; and (C) creating an identifier for a pair of the connected device and a connection environment by combining all or some of the identification information specific to the device, a device identification information type representing a type of identification information specific to the device, and a protection method type representing a type of a protection method used in protecting the connection with the device.

A fifth aspect of the present invention is to provide a service control method of controlling a service to be provided to a device, including: (A) receiving a service request from the device; (B) verifying compliance with an access control rule based on an identifier for a pair of the connected device and a connection environment, the identifier being generated by combining all or some of the identification information specific to the device, a device identification information type representing a type of identification information specific to the device, and a protection method type representing a type of a protection method used in protecting the connection with the device; (C) processing the received service request based on a result of the verification of compliance; and (D) transferring the processed service request to a service provider apparatus providing the service for the device.

A sixth aspect of the present invention is to provide a service request method of requesting a service for a device, comprising: (A) creating a service request including an identifier for a pair of the connected device and a connection environment, the identifier being generated by combining all or some of the identification information specific to the device, a device identification information type representing a type of the identification information specific to the device, and a protection method type representing a type of a protection method used in protecting the connection with the device; (B) receiving a service response for the service request, the service response including metadata describing information to acquire the service to be transferred to the device; and (C) creating a service transfer request according to the metadata.

### BRIEF DESCRIPTION OF DRAWINGS

Fig. 1 is a block diagram of a device authentication apparatus according to a first embodiment.
Fig. 2 is an example of a device identifier according to the fist embodiment to a third embodiment.
Fig. 3 is a sequence diagram of a device authentication method according to the first embodiment.
Fig. 4 is a flowchart showing the device authentication method according to the first embodiment.

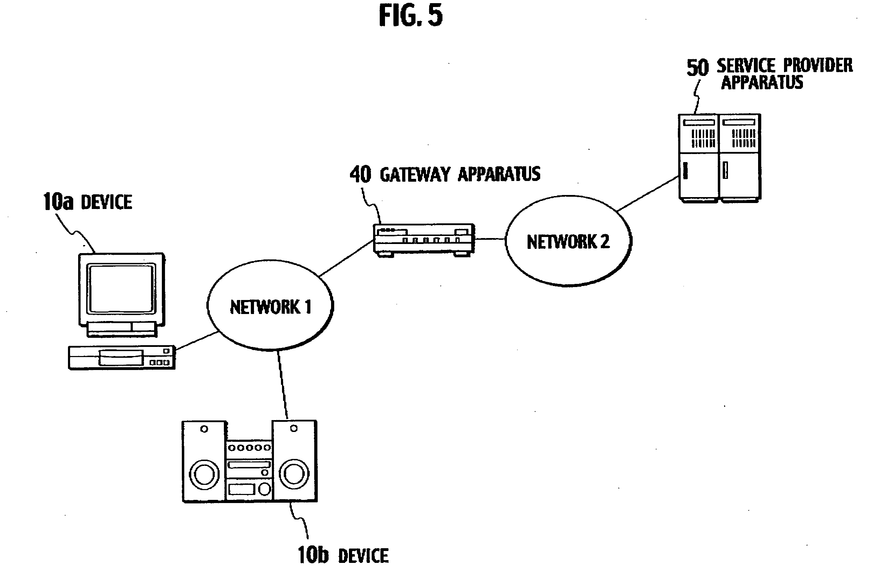

Fig. 5 is a block diagram of a system according to the second embodiment.
Fig. 6 is a block diagram of a device authentication apparatus and a service control apparatus according to the second embodiment.
Fig. 7 is a sequence diagram of a service control method according to the second embodiment.
Fig. 8 is a flowchart (No. 1) showing the service control method according to the second and third embodiments.
Fig. 9 is a flowchart (No. 2) showing the service control method according to the second and third embodiments.
Fig. 10 is a block diagram of a system according to the third embodiment.
Fig. 11 is a block diagram of a device authentication apparatus, a service control apparatus, and a service request apparatus according to the third embodiment.
Fig. 12 is a sequence diagram of a service request method according to the third embodiment.
Fig. 13 is a flowchart (No. 1) showing the service request method according to the third embodiment.
Fig. 14 is a flowchart (No. 2) showing the service request method according to the third embodiment.
Fig. 15 is a flowchart (No. 3) showing the service request method according to the third embodiment.
Fig. 16 is a flowchart (No. 4) showing the service request method according to the third embodiment.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

### <First Embodiment>

### (Device Authentication Apparatus)

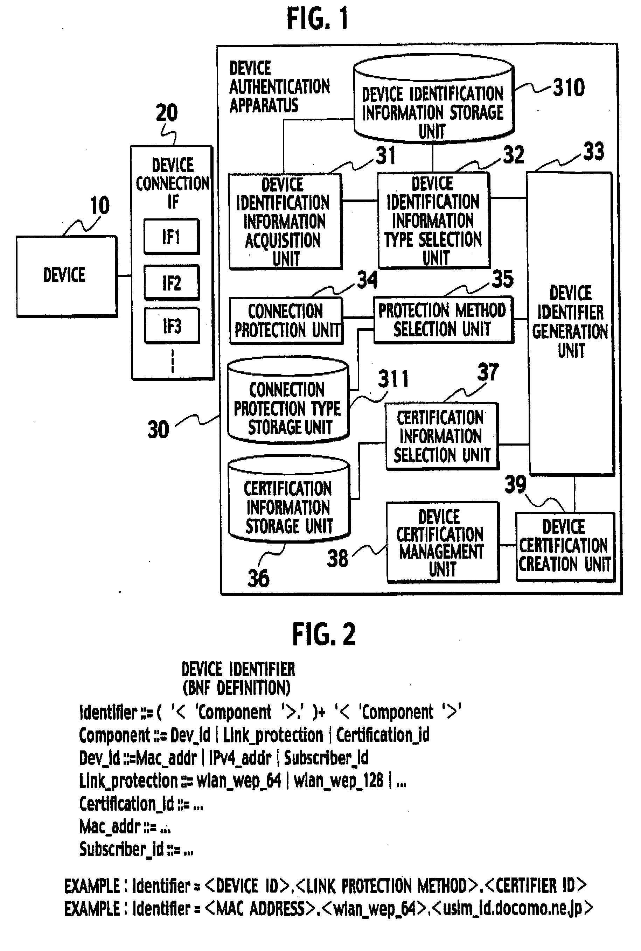

A device authentication apparatus 30 according to a first embodiment authenticates a device 10 connected thereto with a device connection interface (IF) 20 interposed therebetween as shown in Fig. 1, generates an identifier for a pair of the device 10 and a connection environment, and creates a device certification certifying the correspondence between the identifier and the device.

The device authentication apparatus 30, as shown in Fig. 1. includes a device identification information acquisition unit 31, a device identification information type selection unit 32, a device identifier generation unit 33, a connection protection unit 34, a protection method selection unit 35, a certification information storage unit 36, a certification information selection unit 37, a device certification management unit 38, a device certification creation unit 39, a device identification information storage unit 310, and a connection protection type storage unit 311.

The device identification acquisition unit 31 acquires device-specific identification information received from the device 10 or stored in the device identification information storage unit 310. The device-specific identification information can be, for example, a MAC address, which is a link layer address of the device connection IF. The device identification information acquisition unit 31 may perform authentication of the device to verify the correspondence between the device and the above identification information. The authentication method is, for example, a WEP method or the like. The WEP method is an authentication method in a link layer of wireless LAN.

The device identification information type selection unit 32 selects a type of the device identification information stored in the device identification information storage unit 310 from a plurality of candidates. For example, pieces of the identification information representing devices of a same type and the type thereof are managed in a correspondence table, and the device identification information to be incorporated in the identifier can be selected with reference to the correspondence table when generating the identifier.

The connection protection unit 34 protects a connection between the device and the device authentication apparatus. For example, the connection protection unit 34 prevents tapping by means of encryption of the communication path and prevents falsification by means of data authentication. For example, in the case of a connection using wireless LAN, the connection protection unit 34 encrypts communication packets using a WEP method. The method to protect the connection can be also selected from a plurality of methods.

The protection method selection unit 35 selects an encryption algorithm and a data authentication algorithm from the plurality of connection protection methods stored in the connection protection type storage unit 311.

The device identifier generation unit 33 combines the device identification information, the type of the device identification information, the type information of the connection protection method, and identification information of device certification information described later to generate an identifier corresponding to a pair of the device and the connection environment.

The form of the device identifier can be defined as shown in Fig. 2 by use of, for example, the Backus Naur form (BNF). According to this form, for example, the identifier corresponding to the pair of the device and the connection environment can be represented by a combination of the device identifier (device ID), the link protection method, and a certifier identifier (certifier ID), which are specifically the MAC address, the WEP method, and a serial number (ITU- T Recommendation X. 509) included in a public key certification, respectively.

The device certification creation unit 39 creates a device certification certifying the correspondence between the above identifier and the device to the third party. For example, the identifier is signed using a secret key corresponding to the above public key.

When there are available pieces of the certification information, the certification information selection unit 37 selects a piece of certification information for use from the certification information storage unit 36. The identification information of the selected piece of certification information can be combined with the device identifier as described above. For example, the certification information can be identification information of a public key assigned to the device authentication apparatus.

The certification information storage unit 36 stores the certification information. The device identification information storage unit 310 stores the device identification information and a plurality of types of the device identification information. The connection protection type storage unit 311 stores a plurality of connection protection methods. Each of the certification information storage unit 36, device identification information storage unit 310, and connection protection type storage unit 311 may be either an internal memory such as RAM or an external memory such as HD or FD.

The device 10 acquires the device certification generated by the device authentication apparatus 30. This device certification is presented when requesting a service. This enables service access control according to the pair of the device and the connection environment.

### (Device Authentication Method)

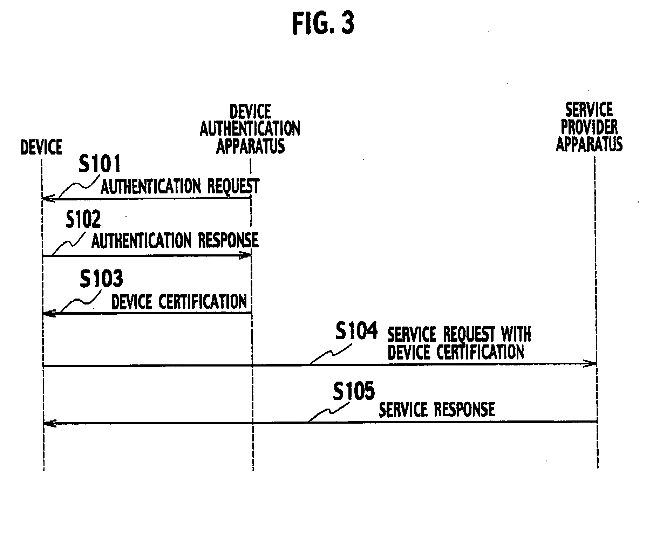

Next, a description is given of a device authentication method according to the first embodiment using Fig. 3. Fig. 3 is an example of a service request sequence using the device certification.

First, in step S101 in Fig. 3, the device authentication apparatus 30 sends an authentication request to the device 10.

Next, in step S102, the device 10 sends an authentication response to the device authentication apparatus 30 to certify the correspondence with the device identification information to the device authentication apparatus 30. The method of authentication can be, for example, the challenge response authentication using a secret key corresponding to the device-specific identification information. In this case, the authentication request includes a challenge such as a random number. The device 10 encrypts the challenge using a secret key held by the device 10 to generate a response and sends the response in the authentication response. The device authentication apparatus 30 manages the secret key corresponding to the device and can verify the validity of the response by checking whether the result of decryption of the response matches the challenge.

Next, when the authentication is successful, in step S103, the device authentication apparatus 30 sends the device certification including the generated identifier to the device 10. The method of outputting the device certification is described later in detail.

In step S104, the device 10 gives the received device certification to subsequent service requests. The service provider apparatus performs service access control (service response) according to the aforementioned identifier in step S105.

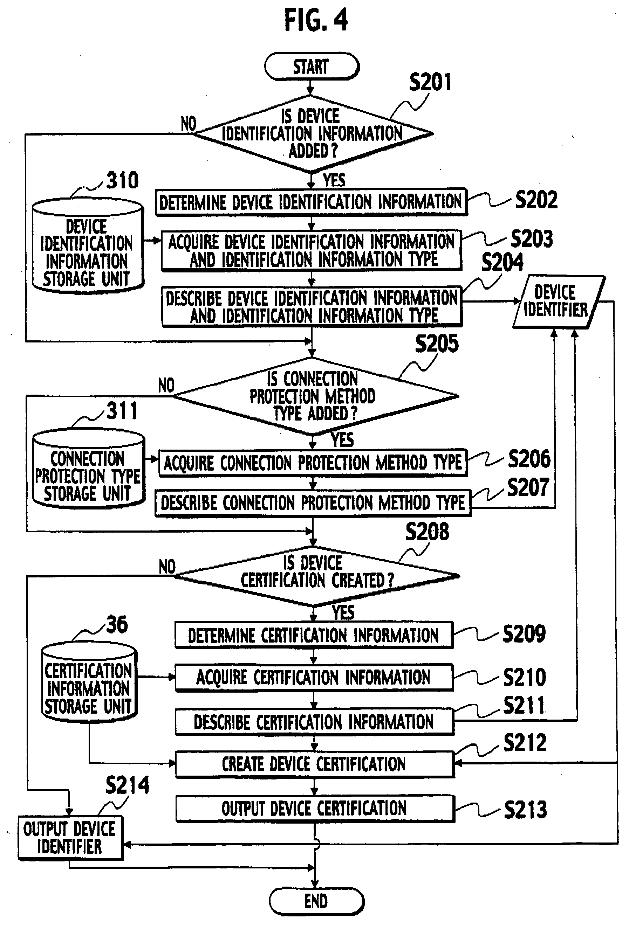

Next, a description is given of the method of outputting the device certification in the device authentication apparatus 30 using Fig. 4.

First, in step S201, the device authentication apparatus 30 determines whether to add the device identification information. When determining to add the device identification information, the device authentication apparatus 30 proceeds to step S202 and determines the device identification information to be added. In step S203, the device-specific identification information (device identification information) and the type (identification information type) of the device identification information are acquired from the device identification information storage unit 310. In step S204, the device identification information and identification information type are described as the device identifier.

Next, in step S205, the device authentication apparatus 30 determines whether to add the connection protection method type. When determining to add the connection protection method type, the device authentication apparatus 30 proceeds to step S206. and the connection protection method type is acquired from the connection protection type storage unit 311. In step S207, the connection protection method type is described as the device identifier.

Next, in step S208, the device authentication apparatus 30 determines whether to create the device certification. When determining not to create the device certification, the device authentication apparatus 30 proceeds to step S214 and outputs the device identifier, thus terminating the process.

When determining to create the device certification, in step S209, the device authentication apparatus 30 determines the certification information for use in creating the device certification. In step S210, the certification information is acquired from the certification information storage unit 36. Next, in step S211, the certification information is described as the device identifier.

Next, in step S212, the device authentication apparatus 30 creates the device certification certifying the correspondence between the device identifier and the device using the certification information. In step S213, the device certification is outputted, and the process is terminated.

### (Operation and Effect)

With the device authentication apparatus 30 and the device authentication method according to the first embodiment, it is possible to implement control of access to a service based on device identification information and the end-to-end security level reflecting the device connection environment.

Moreover, with the device authentication apparatus 30 and the device authentication method according to the first embodiment, the identification Information of the protection method of the connection link between the device authentication apparatus 30 and device 10 and the method of authenticating the device are combined with the device identification information. Accordingly, it is possible to generate a unique device identifier which can specify the device and the connection environment. Using this device identifier enables service access control taking an account of, for example, the protection level of the connection link in addition to the type of the device.

Moreover, the device authentication apparatus 30 creates the device certification certifying the correspondence between the connected device and the identifier and further combines the identification information of the certification information for use in creating the device certification to generate the device identifier. The correspondence between the device identifier and the device can be therefore certified to the third party, thus strengthening the rationale for the access control. Moreover, the identification information of the certification information used for creating the certification is included in the identifier, which enables the access control according to the type of the certification information.

Moreover, the device authentication apparatus 30 selects the method of authenticating the device, the method of protecting the connection link to the device, and the certification information for use in creating the device certification and combines the identification information of the selected methods and certification information to generate the device identifier. It is therefore possible to select proper methods of authentication and protection according to the device connected, and the device authentication apparatus 30 can deal with various devices.

### <Second Embodiment>

As shown in Pig. 5, a second embodiment assumes a scenario in which devices 10a and 10b request services provided by a service provider apparatus 50 through a gateway apparatus 40. (Device Authentication Apparatus and Service Control Apparatus)

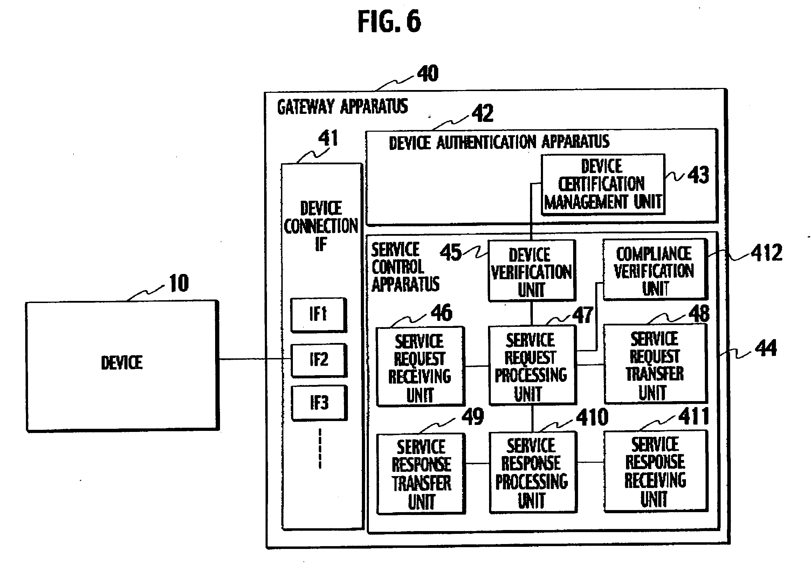

As shown in Fig. 6, the gateway apparatus 40 includes a service control apparatus 44 in addition to a device connection IF 41 and a device authentication apparatus 42 described in the first embodiment. The second embodiment differs from the first embodiment in that the service control apparatus 44 relays service requests from the devices 10a and 10b to the service provider apparatus 50 and, based on a rule of access control to the server and the device certification, carries out verification of compliance with the access control rule instead of the device authentication apparatus.

The device authentication apparatus 42 shown in Fig. 6 includes a similar configuration to that of the device authentication apparatus 30 shown in Fig. 1. Only a device certification management unit 43 is shown in Fig. 6, but it should be understood that the device authentication apparatus 42 includes the device identification information acquisition unit 31, device identification information type selection unit 32, device identifier generation unit 33, connection protection unit 34, protection method selection unit 35, certification information storage unit 36, certification information selection unit 37, device certification creation unit 39, device identification information storage unit 310, and connection protection type storage unit 311.

The service control apparatus 44 includes a device verification unit 45, a service request receiving unit 46, a service request processing unit 47, a service request transfer unit 48, a service response transfer unit 49, a service response processing unit 410, a service response receiving unit 411, and a compliance verification unit 412.

The service request receiving unit 46 receives a service request from the device 10 and inputs the same into the service request processing unit 47.

When the service request does not include the request for certification of compliance with the access control rule, the service request processing unit 47 inputs the service request into the service request transfer unit 48 without processing the same. On the other hand, when the service request includes the request for certification of compliance, the service request processing unit 47 notifies the device verification unit 45 of starting a compliance verification process. The service request processing unit 47 sends the device certification received from the device verification unit 45 to the compliance verification unit 412. Moreover, the service request processing unit 47 incorporates a certification of compliance received from the compliance verification unit 412 into the service request and inputs the same into the service request transfer unit 48.

The service request transfer unit 48 sends the service request to the specified service provider apparatus 50.

The service response receiving unit 411 receives from the service provider apparatus 50 a service response including the request for certification of compliance with the access control rule and inputs the same into the service response processing unit 410.

When the service response does not include a request for proxy verification of compliance with the access control rule, the service response processing unit 410 inputs the service response into the service response transfer unit 49 without processing the same. On the other hand, when the service response includes the request for proxy verification of compliance, the service response processing unit 410 notifies the device verification unit 45 of starting the compliance verification process. Moreover, the service request processing unit 47 sends the device certification received from the device verification unit 45 to the compliance verification unit 412. The service request processing unit 47 inputs the service response into the service response transfer unit 49.

The service response transfer unit 49 sends the service response to the device 10 which has sent the service request.

The device verification unit 45 requests the device certification of the device of interest from the device authentication apparatus 42. When the authentication of the device is not completed, the device authentication apparatus 42 executes the procedure of device authentication described in the first embodiment to create the device certification and inputs the same into the device verification unit 45. When the authentication of the device is completed, the device authentication apparatus 42 inputs the device certification managed by the device certification management unit 43 into the device verification unit 45.

The compliance verification unit 412 verifies the compliance based on the identifier included in the device certification and the access control rule included in the request for certification of compliance. Moreover, the compliance verification unit 412 creates a certification of compliance including the result of the verification of compliance.

The device 10 receives the service response and extracts the request for certification of compliance included in the service response. The device 10 then creates a service request including the request for certification of compliance and sends the same to the service provider apparatus 50.

### (Service Control Method)

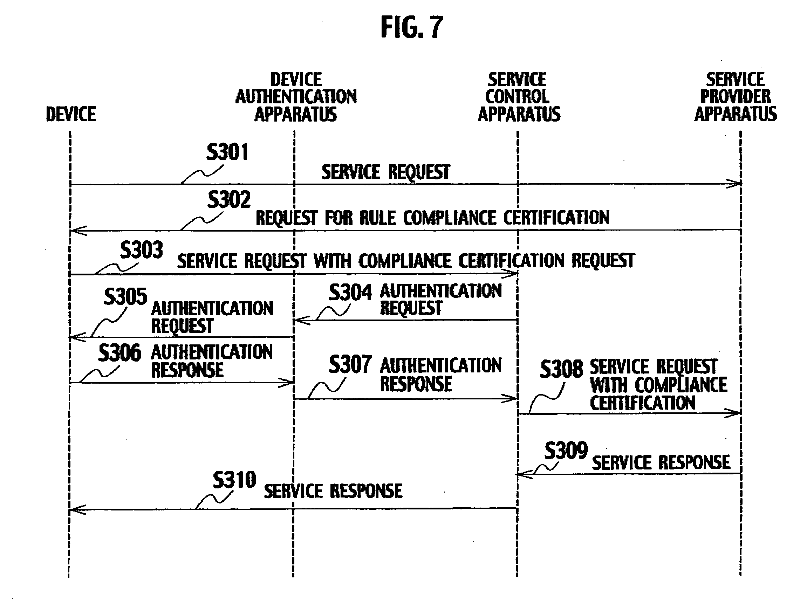

Next, a description is given of a service control method according to the second embodiment using Fig. 7.

First, in step S301, the device 10 creates the service request and sends the same to the service provider apparatus 50. Herein, the service control apparatus 44 receives the service request but sends the service request to the service provider apparatus 50 without processing the request when the service request does not include the request for certification of compliance with the access control rule.

Next, in step S302 , the service provider apparatus 50 which has received the service request returns the service response including the request for certification of compliance with the access control rule before providing a service. The service control apparatus 44 relays the request for certification of compliance in the same way as the case of the service request and transfers the request for certification of compliance to the device 10 without processing the request.

Next, the device 10 receives the service response and extracts the request for certification of compliance included in the service response. In step S303, the device 10 creates the service request including the request for certification of compliance and sends the same to the service control apparatus 44.

Next, when receiving the service request and detecting the request for certification of compliance being included, the service control apparatus 44 starts the compliance verification process and creates the certification of compliance including the result of verification. At this time, the service control apparatus 44 requests the device certification of the device of interest from the device authentication apparatus 42 in step S304. When the authentication of the device is not completed, the device authentication apparatus 42 sends the authentication request to the device 10 in step S305 and receives the authentication response in step S306. The device authentication apparatus 42 sends the authentication response to the service control apparatus 44 in step S307. The service control apparatus 44 verifies the compliance based on the authentication response received from the device authentication apparatus 42 and creates the certification of compliance. In step S308, the service control apparatus 44 then sends the service request including the certification of compliance to the service provider apparatus 50.

Next; in step S309, the service provider apparatus 50 carries out access control to the service based on the certification of compliance and returns the service response. In step S310, the service control apparatus 44 sends the device 10 a service response corresponding to the service request of the step S303 according to content of the service response of the step S309.

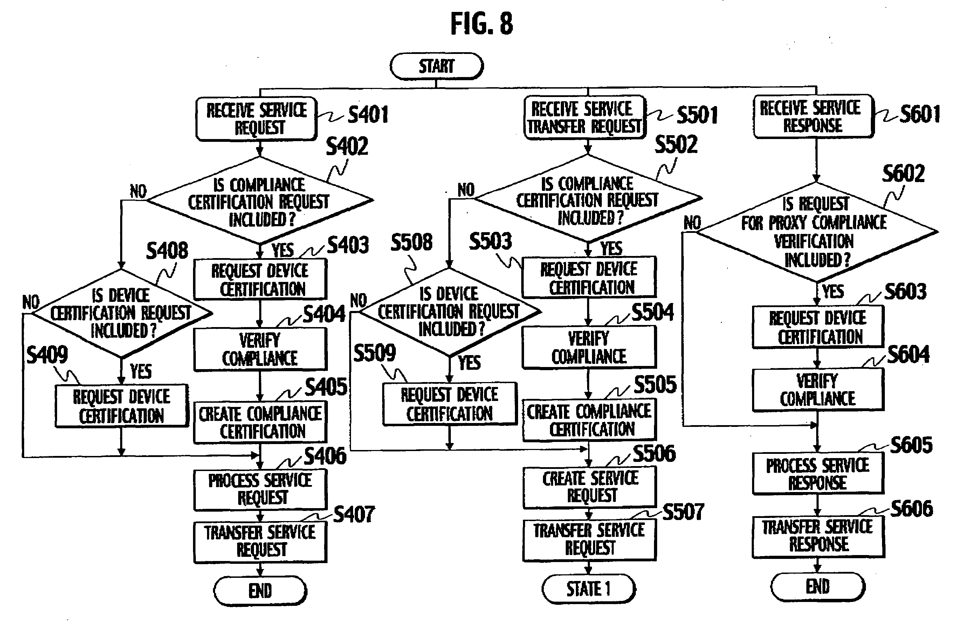

Next, a description is given of a process in the service control apparatus 44 according to the second embodiment using Fig. 8.

First, the description is given of a case where the service control apparatus 44 receives the service request from the device 10.

When receiving the service request in step S401, the service control apparatus 44 judges in step S402 whether the service request includes the request for certification of compliance. When the request for certification of compliance is included, the service control apparatus 44 proceeds to step S403 and, when the request is not included, proceeds to step S408.

In step S403, the service control apparatus 44 sends the device certification request to the device authentication apparatus 42, and in step S404, verifies the compliance based on the received device certification. In step S405, the certification of compliance is created.

On the other hand, in step S408, the service control apparatus 44 judges whether the service request includes the device certification request. When the device certification request is included, the service control apparatus 44 proceeds to step S409 and sends the device certification request to the device authentication apparatus 42. When the request is not included, the service control apparatus 44 proceeds to step S406.

Next, in step S406, the service control apparatus 44 performs processing for the service request, including incorporating the certification of compliance in the service request, and transfers the service request to the service provider apparatus 50. In step S407, the service request is transferred to the service provider apparatus 50.

Next, a description is given of a case where the service control apparatus 44 receives the service response from the service provider apparatus 50.

When receiving the service response in step S601, the service control apparatus 44 judges in step S602 whether the service response includes the request for proxy verification of compliance. When the request is included, the service control apparatus 44 proceeds to step S603, and when the request is not included, proceeds to step S605.

In the step S603, the service control apparatus 44 sends the device certification request to the device authentication apparatus 42. In step S604, the verification of compliance is performed based on the received device certification.

Next, in the step S605, the service control apparatus 44 performs processing for the service response, including deleting a part of the service response according to the result of the verification of compliance, and transfers the service response to the device 10 in step S606.

### (Operation and Effect)

With the service control apparatus 44 and service control method according to the second embodiment, it is possible to implement control of access to a service based on device identification information and the end-to-end security level reflecting the device connection environment.

Moreover, with the service control apparatus 44 and service control method according to the second embodiment, the service request from the device is relayed and processed based on the result of authentication of the device and the result of verification of compliance with the access control rule, and a required service is thus delivered to the device. This enables the service access control for various types of devices to be separated from the devices, thus reducing costs of the apparatuses and devices. Moreover, the service provider apparatus 50 can entrust the verification of compliance, thus reducing costs accompanied with the device verification and access control.

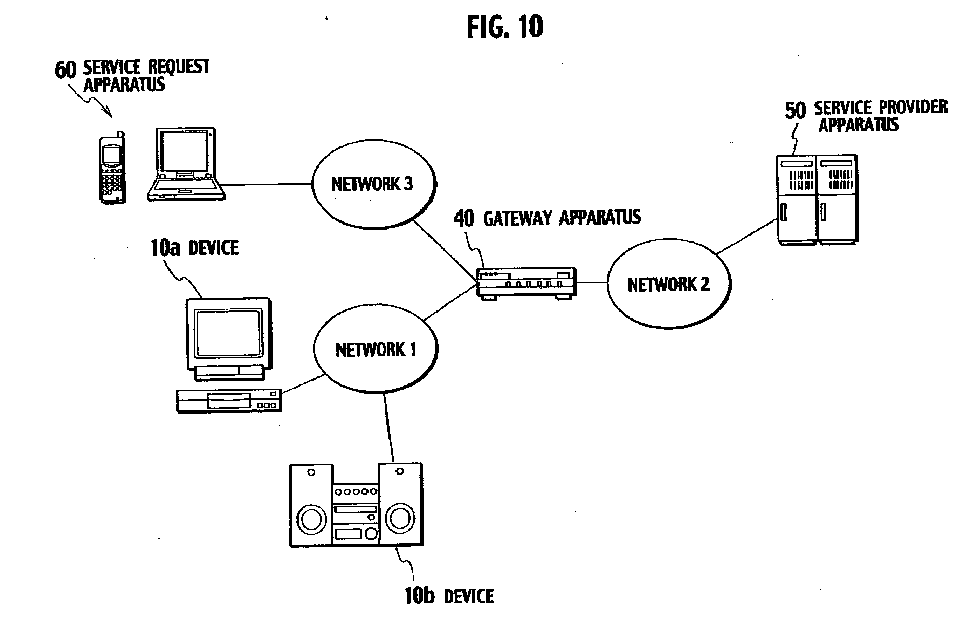

Moreover, the service control apparatus 44 can create the certification of compliance certifying the result of the verification of compliance and give the certification of compliance to a service request. The service control apparatus 44 can therefore present the certification of compliance to the service provider apparatus 50, and the service provider apparatus 50 can confirm that the device and the connection environment thereof comply with the access control rule. <Third Embodiment> A third embodiment implements a service style, as shown in Fig. 10, in which services for the devices 10a and 10b are requested from a service request apparatus 60 outside of the devices 10a and 10b.

### (Device Authentication Apparatus, Service Control Apparatus and Service Request Apparatus)

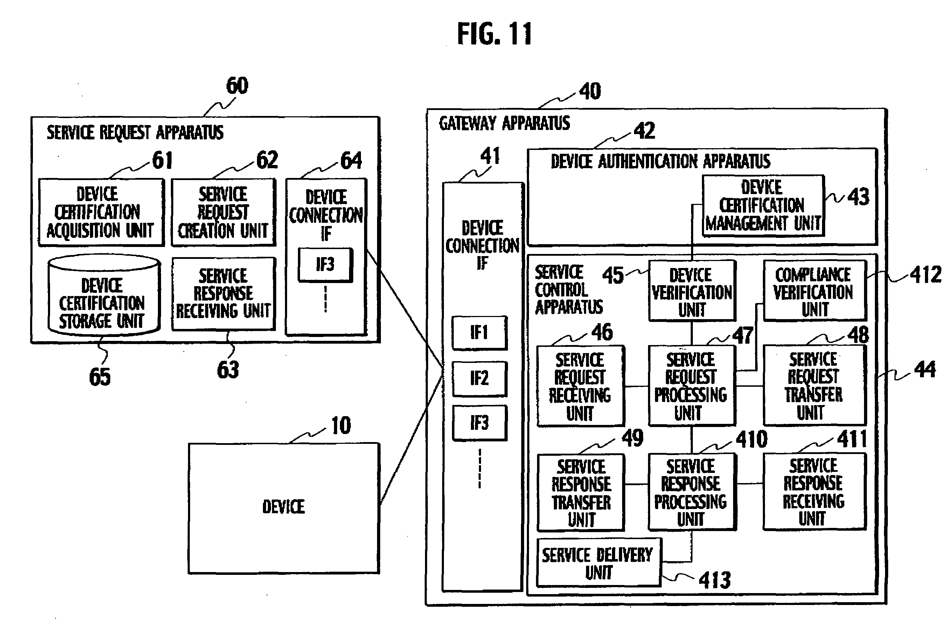

As shown in Fig. 11, the gateway apparatus 40 includes a service control apparatus 44 in addition to a device connection IF 41 and a device authentication apparatus 42 described in the first embodiment.

The device authentication apparatus 42 shown in Fig. 11 has a similar configuration to that of the device authentication apparatus 30 shown in Fig. 1. In Fig. 11, only a device certification management unit 43 is shown, but it should be understood that the device authentication apparatus 42 includes the device identification information acquisition unit 31, device identification information type selection unit 32, device identifier generation unit 33, connection protection unit 34, protection method selection unit 35, certification information storage unit 36, certification information selection unit 37, device certification creation unit 39, device identification information storage unit 310, and connection protection type storage unit 311.

The service control apparatus 44 includes a device verification unit 45, a service request receiving unit 46, a service request processing unit 47, a service request transfer unit 48, a service response transfer unit 49, a service response processing unit 410, a service response receiving unit 411, a compliance verification unit 412, and a service delivery unit 413.

The service request receiving unit 46 receives a service request from the service request apparatus 60 and inputs the same into the service request processing unit 47. Moreover, the service request receiving unit 46 receives a service transfer request from the service request apparatus 60 and inputs the same into the service request processing unit 47.

When the service request does not include the request for certification of compliance with the access control rule, the service request processing unit 47 inputs the service request into the service request transfer unit 48 without processing the same. On the other hand, when the service request includes the request for certification of compliance, the service request processing unit 47 notifies the device verification unit 45 of starting a compliance verification process. Moreover, the service request processing unit 47 sends the device certification received from the device verification unit 45 to the compliance verification unit 412. Moreover, the service request processing unit 47 incorporates the certification of compliance received from the compliance verification unit 412 into the service request and inputs the same into the service request transfer unit 48.

The service request processing unit 47 performs the same processing for the service transfer request as that for the service request.

The service request transfer unit 48 sends the service request to the service provider apparatus 50 specified.

The service response receiving unit 411 receives a service response including the request for certification of compliance with the access control rule from the service provider apparatus and inputs the same into the service response processing unit 410. Moreover, the service response receiving unit 411 receives a service transfer response including a request for proxy verification of compliance and inputs the same into the service response processing unit 410.

When the service response does not include the request for proxy verification of compliance with the access control rule, the service response processing unit 410 inputs the request for proxy verification of compliance into the service response transfer unit 49 without processing the same. On the other hand, when the service response includes the request for proxy verification of compliance, the service response processing unit 410 notifies the device verification unit 45 of starting the compliance verification process. The service request processing unit 47 sends the device certification received from the device verification unit 45 to the compliance verification unit 412. The service request processing unit 47 inputs the service response into the service response transfer unit 49.

Moreover, the service response processing unit 410 performs the same processing for the service transfer response as that for the service response.

The service response transfer unit 49 sends the service response to the service request apparatus 60 which has sent the service request. Moreover, the service response transfer unit 49 sends the service transfer response to the service request apparatus 60 which has sent the service transfer request.

The device verification unit 45 requests the device certification of the device of interest from the device authentication apparatus 42. When the authentication of the device is not completed, the device authentication apparatus 42 executes the device authentication procedure described in the first embodiment. The device certification is thus generated and inputted into the device verification unit 45. When the authentication of the device is completed, the device certification managed by the device certification management unit 43 is inputted into the device verification unit 45.

The compliance verification unit 412 verifies the compliance based on the identifier included in the device certification and the access control rule included in the request for certification of compliance. Moreover, the compliance verification unit 412 creates the certification of compliance including the result of the verification of compliance.

The service delivery unit 413 delivers a service requested from the service request apparatus 60 to the device 10 specified.

The service request apparatus 60 includes a service certification acquisition unit 61, a service request creation unit 62, a service response receiving unit 63, a device connection IF 64, and a device certification storage unit 65.

The device certification acquisition unit 61 requests the device certification of the device of interest from the device authentication apparatus 42. When the authentication of the device is not completed, the device authentication apparatus 42 executes the device authentication procedure described in the first embodiment. The device certification is thus created and inputted into the device certification acquisition unit 61. When the authentication of the device is completed, the device certification managed by the device certification management unit 43 is inputted into the device certification acquisition unit 61. The device certification acquisition unit 61 verifies the acquired device certification. When the verification is successful, the device certification is stored in the device verification storage unit 65.

The service request creation unit 62 creates a service request including the identifier included in the device certification acquired by the device certification acquisition unit 61 and sends the service request to the gateway apparatus 40 through the device connection IF 64. The service request creation unit 62 creates a service transfer request according to metadata included in the service response received by the service response receiving unit 63 and sends the created service transfer request to the gateway apparatus 40.

The service response receiving unit 63 receives from the gateway apparatus 40 the service response corresponding to the service request. The service response includes the metadata describing information to acquire the service to be delivered to the device. Moreover, the service response receiving unit 63 receives a service transfer response corresponding to the service being transferred to the specified device.

The device certification storage unit 65 stores the device certification. The device certification storage unit 65 may be either an internal memory such as RAM or an external memory such as HD or FD.

### (Service Request Method)

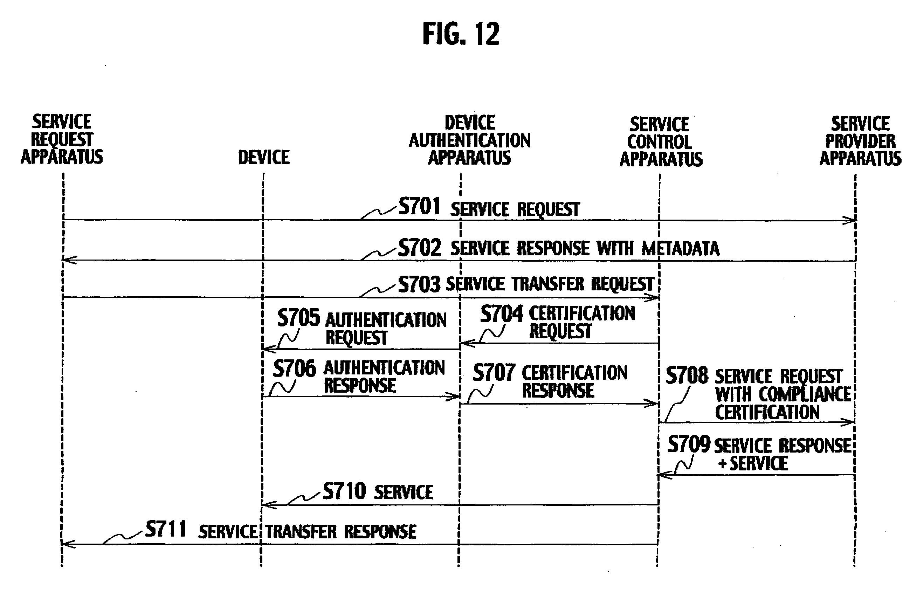

A description is given of a service request method according to a third embodiment using Fig. 12.

In step S701, the service request apparatus 60 sends the service provider apparatus 50 a service request requesting information concerning a service to be delivered to the device. Incorporating the device identification information in this service request allows the service provider apparatus 50 to be notified of a target device.

Next, in step S702, the service provider apparatus 50 incorporates metadata describing the information on the service intended for the device into the service response and sends the service response to the service request apparatus 60. The metadata describes, for example, information on the location of the service and a service request protocol. Moreover, the metadata can include the request for certification of compliance described in the second embodiment.

Next, in step S703, the service request apparatus 60 which has received the service response sends the service transfer request including the service information and the request for certification of compliance to the service control apparatus 44. The service control apparatus 44 requests the device certification of the device of interest from the device authentication apparatus 42 in step S704. When the authentication of the device is not completed, the device authentication apparatus 42 sends the authentication request to the device 10 in step S705 and receives the authentication response in step S706. The device authentication apparatus 42 sends the authentication response to the service control apparatus in step S707. The service control apparatus 44 verifies the compliance based on the authentication response received from the device authentication apparatus 42.

Next, in step S708, when the device and the connection environment comply with the access control rule, the service control apparatus 44 sends the service request including the certification of compliance to the location described in the service information.

Next, in step S709, the service provider apparatus 50 returns the service for the device together with the service response. For example, when the service request protocol is RTSP (see IETF RFC2326) and streaming content is requested via RTSP, the service response is a response message of RTSP, and the service is media data delivered over RTP (see IETF RFC1889).

Next, in step S710, the service control apparatus 44 delivers the service to the device 10 and sends the service transfer response to the service request apparatus.

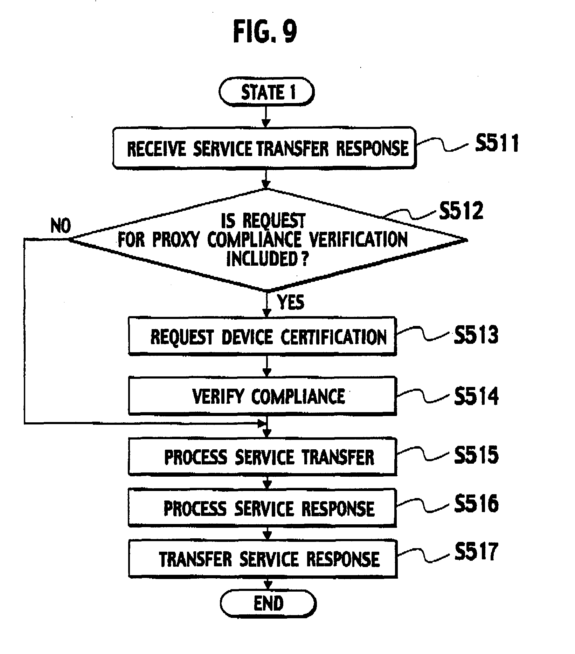

Next, a description is given of a process in the service control apparatus 44 according to the third embodiment using Figs. 8 and 9.

The operation of the service control apparatus 44 receiving the service request from the service request apparatus 60 is the same as that of the steps S401 to S409 described in the second embodiment, and the description thereof is omitted. The operation of the service control apparatus 44 receiving the service response from the service provider apparatus 50 is also the same as that of the steps S601 to 606 described in the second embodiment, and the description thereof is omitted.

Next, a description is given of a case where the service control apparatus 44 receives the service transfer request and service transfer response from the service request apparatus 60.

When receiving the service transfer request in step S501 of Fig. 8, the service control apparatus 44 judges in step S502 whether the service transfer request includes the request for certification of compliance. The process of steps S503 to S509 is the same as that of the aforementioned steps 5403 to S409, and the description thereof is omitted.

When receiving the service transfer response in step S511 of Fig. 9, the service control apparatus 44 judges in step S512 whether the service transfer response includes the request for proxy verification of compliance. The process of steps S513 and S514 is the same as that of the aforementioned steps S603 and S604, and the description thereof is omitted here.

Next, in step S515, the service control apparatus 44 transfers the service to the specified device 10.

Next, in step S516, the service control apparatus 44 performs processing for the service transfer response, including incorporating the certification of compliance, and transfers the service transfer response to the service request apparatus 60 in step S517.

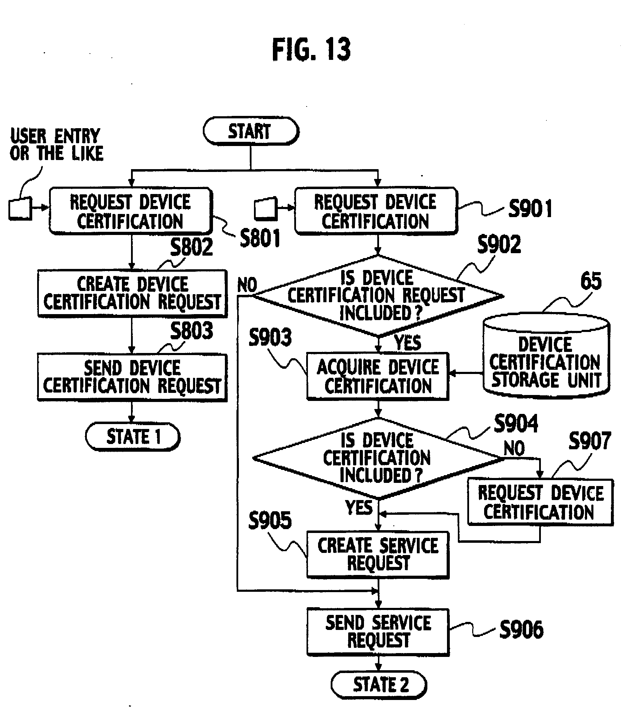

Next, a description is given of a process in the service request apparatus 60 according to the third embodiment using Figs. 13 to 16.

First, the description is given of a case where the service request apparatus 60 receives the device certification request.

When receiving the device certification request due to an entry by a user or the like in step S801 of Fig. 13, the service request apparatus 60 creates the device certification request in step S802. In step S803, the service request apparatus 60 sends the device certification request to the gateway apparatus 40.

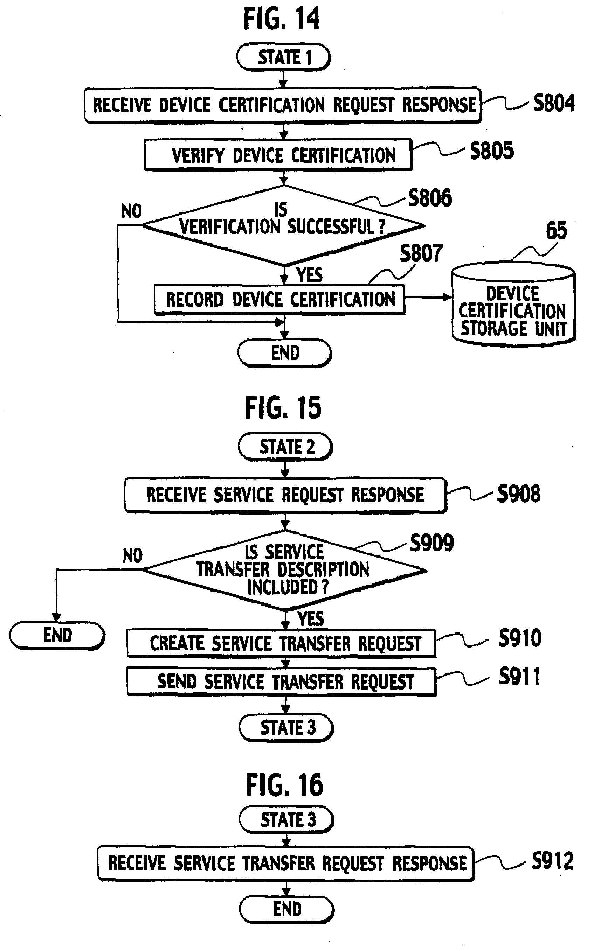

Next, when receiving the device certification request response from the gateway apparatus 40 in step S804 of Fig. 14, the service request apparatus 60 verifies the device certification in step S805. When the verification is successful, the device certification is stored in the device certification storage unit 65 in step S807.

Next, a description is given of a case where the service request apparatus 60 receives the service request.

When receiving the service request due to an entry by a user or the like in step S901 of Fig. 13, the service request apparatus 60 judges in step S902 whether the service request includes the device certification request. When the device certification request is included, the service request apparatus 60 proceeds to step S903, and, when the device certification request is not included, proceeds to step S906.

In the step S903, the service request apparatus 60 acquires the device certification from the device certification storage unit 65. At this time, when the device certification is not stored in step S904, the service request apparatus 60 proceeds to step S907 and sends the device certification request, and the process of the aforementioned steps S801 to S807 is then performed. The service request apparatus 60 creates the service request in step S905 and sends the same to the service provider apparatus 50 in step S906.

Next, when receiving the service request response in step S908 of Fig. 15, the service request apparatus 60 judges in step S909 whether the service request response includes a service transfer description. When the service transfer description is included, the service request apparatus 60 creates the service transfer request in step S910 and sends the service transfer request to the service control apparatus 44 in step S911.

Next, in step S912 of Fig. 16, the service request apparatus 60 receives the service transfer request response from the service control apparatus 44.

### (Operation and Effect)

With the service control apparatus 44 according to the third embodiment, the service request includes information on the specified device to which the requested service is transferred, and the requested service can be delivered to the specified device. It is therefore possible to transfer a service to a device different from a device which has requested the service, thus allowing service delivery to a device which does not have service request/response functions.

Moreover, with the service request apparatus 60 and service request method according to the third embodiment, it is possible to implement control of access to a service based on device identification information and the end-to-end security level reflecting the device connection environment.

Moreover, with the service request apparatus 60 and service request method according to the third embodiment, it is possible to request a service specified in metadata by the service provider apparatus 50 to be transferred to the device 10 specified by the device identifier. The service can be requested to be transferred to a device from the outside of the device, thus allowing service delivery to the device which does not have the service request/response functions.

Moreover, the metadata includes the request for certification of compliance of the service to be transferred with the access control rule, and the service request apparatus 60 according to the third embodiment can create the service transfer request including the request for certification of compliance. The service provider apparatus 50 can therefore entrust the verification of compliance to, for example, the service control apparatus 44, by embedding the request for certification of compliance with the access control rule in the metadata.

### <Other embodiment>

The present invention is described by the above embodiments, but it should be understood that the description and drawings as a part of the disclosure does not limit the present invention. Those skilled in the art will understand various alternatives, examples, and operational technologies from this disclosure.

For example, in the second and third embodiments of the present invention, it is described that the device authentication apparatus 42 and service control apparatus 44 are provided for the gateway apparatus 40, but these apparatuses may be provided as an apparatus separate from the gateway apparatus 40.

Various modifications will become possible for those skilled in the art after receiving the teachings of the present invention without departing from the scope thereof.

## Claims

1. A device authentication apparatus, comprising:
a device identification information acquisition unit configured to acquire identification information specific to a device;
a connection protection unit configured to protect a connection with the device; and
an identifier generation unit configured to combine all or some of the device-specific identification information, a device identification information type representing a type of the device-specific identification information, and a protection method type representing a type of a protection method used by the connection protection unit to generate an identifier for a pair of the connected device and a connection environment.

2. The device authentication apparatus according to claim 1, further comprising:
a device certification creation unit configured to creat a device certification certifying a correspondence between the connected device and the identifier, wherein
the identifier generation unit further combines identification information of certification information used by the device certification creation unit to generate the identifier.

3. The device authentication apparatus according to claim 2, further comprising:
a device identification type selection unit configured to select the device identification information type from a plurality of candidates;
a protection method type selection unit configured to select the protection method type from a plurality of candidates; and
a certification information selection unit configured to select the identification information of the certification information from a plurality of candidates, wherein
the identifier generation unit combines the selected device identification information type, protection method type, and identification information of the certification information to generate the identifier.

4. A service control apparatus disposed between a device and a service provision apparatus providing a service for the device, comprising:
a service request receiving unit configured to receive a service request;
a compliance verification unit configured to verify compliance with an access control rule based on an identifier for a pair of the connected device and a connection environment, the identifier being generated by combining all or some of identification information specific to the device, a device identification information type representing a type of identification information specific to the device, and a protection method type representing a type of a protection method used in protecting a connection with the device;
a service request processing unit configured to process the service request received by the service request receiving unit based on a result of the verification by the compliance verification unit; and
a service request transfer unit configured to transfer the service request processed by the service request processing unit to the service provider apparatus.

5. The service control apparatus according to claim 4, further comprising a device verification unit configured to acquire a device certification certifying a correspondence between the connected device and the identifier.

6. The service control apparatus according to claim 4, wherein
the compliance verification unit creates a certification of compliance certifying a result of the verification of compliance, and wherein
the service request processing unit gives the certification of compliance to the service request.

7. The service control apparatus according to claim 4, wherein
the received service request includes information of a specified device to which the requested service is to be transferred, the service control apparatus further comprising:
a service delivery unit configured to deliver the requested service to the specified device.

8. A service request apparatus requesting a service for a device, comprising:
a service request creation unit configured to create a service request including an identifier for a pair of the connected device and a connection environment, the identifier being generated by combining all or some of identification information specific to the device, a device identification information type representing a type of the identification information specific to the device, a protection method type representing a type of a protection method used in protecting a connection with the device; and
a service response receiving unit configured to receive a service response for the service request, the service response including metadata describing information to acquire service to be transferred to the device, wherein
the service request creation unit further creates a service transfer request according to the metadata.

9. The service request apparatus according to the claim 8, further comprising a device certification acquisition unit configured to acquire a device certification certifying a correspondence between the connected device and the identifier.

10. The service request apparatus according to claim 8, wherein
the metadata includes a request for certification of compliance of the service to be transferred with an access control rule, and wherein
the service request creation unit creates a service transfer request including the request for certification of compliance.

11. A device authentication method, comprising:
acquiring identification information specific to a device;
protecting a connection with the device; and
creating an identifier for a pair of the connected device and a connection environment by combining all or some of the identification information specific to the device, a device identification information type representing a type of identification information specific to the device, and a protection method type representing a type of a protection method used in protecting the connection with the device.

12. A service control method of controlling a service to be provided to a device, comprising:
receiving a service request from the device;
verifying compliance with an access control rule based on an identifier for a pair of the connected device and a connection environment, the identifier being generated by combining all or some of the identification information specific to the device, a device identification information type representing a type of identification information specific to the device, and a protection method type representing a type of a protection method used in protecting the connection with the device;
processing the received service request based on a result of the verification of compliance; and
transferring the processed service request to a service provider apparatus providing the service for the device.

13. A service request method of requesting a service for a device, comprising:
creating a service request including an identifier for a pair of the connected device and a connection environment, the identifier being generated by combining all or some of the identification information specific to the device, a device identification information type representing a type of the identification information specific to the device, and a protection method type representing a type of a protection method used in protecting the connection with the device;
receiving a service response for the service request, the service response including metadata describing information to acquire the service to be transferred to the device; and
creating a service transfer request according to the metadata.
